# EUROPEAN PATENT SPECIFICATION

(11) **EP 4 272 976 B1**
(45) Date of publication and mention of the grant of the patent: **26.03.2025**
(21) Application number: 22171613.7
(22) Date of filing: 04.05.2022
(51) Int. Cl.: B60B 33/00, B60B 33/02

(54) **LOCKABLE CASTOR WITH IMPROVED BRAKE RELEASE FUNCTION**
VERRIEGELBARE LENKROLLE MIT VERBESSERTER BREMSLÖSEFUNKTION
ROULETTE VERROUILLABLE DOTÉE D'UNE FONCTION DE LIBÉRATION DE FREIN AMÉLIORÉE

(43) Date of publication of application: 08.11.2023
(73) Proprietor: Swede Wheel AB, 335 73 Hillerstorp (SE)
(72) Inventor: ODIN, Hans, 331 41 Värnamo (SE)
(74) Representative: Bergenstråhle & Partners AB

(56) References cited:
- EP-B1- 0 358 943
- US-A- 4 035 864

## Description

### Technical field

The present invention relates to a lockable castor with an improved brake release function. This type of castor may for example be used at castors arranged for attachment to an underside of an object, for example a cart or a trolley.

### Technical background

Within for example material handling, it is common to use different kinds of carts and trolleys for storing and moving material between different location within a production site or from one site to another. A common use of this type of carts and trolleys is for example within food industry, for loading and transporting food from a production site to a store. The carts are equipped with a number of wheels, so called castors, which are arranged for attachment to an underside of the cart/trolley. As mentioned, these kinds of carts may be used for loading, storing and transporting goods which trolleys are equipped with for example four castors, wherein at least one of the rear castors (referring to a forward motion of the trolley) is lockable. It is also common that at least the two rear castors are rotatably arranged relative the cart, wherein it is possible to turn the cart for redirect its motion while pushing the cart forwards. Of course, all castors may be rotatably arranged relative the cart. Other combinations of number of castors and how many of them which are rotatable, may also be used at carts and trolleys. The rotation of the castor relative the cart is normally handled by some kind of ball bearing solutions, well known within the art.

It is also a very common function that at least one wheel is possible to lock, to prevent the cart from moving. This is normally done by pressing down a first end of a brake pedal of some kind, wherein some kind of engagement means is urged against the wheel and locks the same relative the castor. A further function may also be that both the rotation of the wheel relative the castor and the rotation of the castor relative the cart is locked simultaneously, which may be called "total lock". This is performed by one single action where a user presses down a first end of a brake pedal wherein both an engagement means is urged against the wheel and locks the same relative the castor, and simultaneously, another engagement means engages with for example a toothed edge of an annular member, which is a part of the "ball bearing solution" which connects the castor and the underside of the cart/trolley. When the engagement means engages with the toothed edge, the annular member is locked in position and the rotation of the castor relative the cart is prevented. To release the braking function, the brake pedal is maneuvered directly by pushing the first end of the brake pedal upwards, or by pushing a second end of the brake pedal in an opposite direction, normally forwards.

One example of such a solution is found in US 4,035,864, where a swivel castor is provided with a parking brake for locking the running wheel to prevent it from running and to prevent the castor-fork from swiveling. In a cavity of a forked castor is disposed an expanding toggle which takes the form of a foot-operated control pedal, which is pivotally mounted in a socket, and is guided by a guide lug in a guide slot. On the trailing side of the castor, the expanding toggle is pivotally mounted below the fork back in a socket of a resilient or spring-loaded locking rocker. The fork back and locking rocker enclose the expanding toggle between themselves with prestressing. The guide slot may be disposed in the rear portion of the castor-fork. The guide lug takes the form of a resetting cam which in the locking position extends out of the guide slot to form a foot-operated cam to tilt the expanding toggle back into its release position. One problem with this solution is that it is not so easy to reach and get in contact with the resetting cam of the control pedal. Another problem is that if for example a trolley, which is arranged with castors of this kind, is hit by an object for example a fork of a forklift when the trolley is used in a warehouse or the like, the brake may be destroyed instead of releasing the brake such as the trolley may roll away a short distance. The direction of the force is naturally along the floor, i.e. in a substantially horizontal direction. This situation may happen quite often and the cost for changing damaged castors may be high.

Other solutions which in some way has solved the "easy to reach"-problem, but still lacks a solution for taking care of the problem if the brake pedal/release pedal is subjected by a hit from an object in the horizontal direction. One such solution is presented in EP 0 358 943 B1, where a castor mounting includes a parking brake housed in a rear extension of a fork and where the castor is provided with an operating pedal which acts by means of a cam part on a resilient plate articulated to the fork, and a release pedal articulated to the pedal and arranged to project from the extension in the braked configuration of the castor to enable its easy release, by a pressing force downwards in the vertical direction, i.e. in direction towards the floor. There are a number of common solutions which utilizes the same basic principles.

Another problem is that there is no existing solution for a release function of a castor which is cheap and easy to complement existing castors later, with a release function.

### Summary of the invention

One object of the present invention is to provide a lockable castor which solves the above-described problems, which are solved by a lockable castor according to the independent claim 1.

According to the invention, a lockable castor with an easy access release pedal is disclosed. The castor is arranged for attachment to an underside of an object, for example a cart or trolley, and referring to the castors attached position on an underside of an object and to a motion direction of the object when moving it forwards, the castor comprises an attachment means arranged for attachment to the underside of the object, a wheel, a forked bracket which comprises a top which faces the attachment means and further two projecting wings, which project downwards in direction away from the top. The wings preferably are integrally formed with the top, and the wings carry a pin at their lower ends for rotatably supporting the wheel. The forked bracket comprises an extension which extends rearwardly above the wheel, in an extension direction, wherein the extension of the forked bracket comprises a guide slot positioned above the wheel (20).

The castor further comprises a parking brake, which comprises a plate, which is resiliently arranged between the wings of the forked bracket, above the wheel and below the extension and the top of the forked bracket. The plate comprises a first end which extends rearwardly below the extension of the forked bracket and which is adapted to be operated to lock the wheel against rotation relative to the forked bracket by an engagement means. The parking brake further comprises a brake pedal, arranged to be in contact with the first end of the plate, which brake pedal comprises an operable end which projects from the extension of the fork and a releasing end opposite the operable end, which releasing end projects through the guide slot of the extension of the forked bracket. The brake pedal further comprises an engaging portion arranged between the operable end and the releasing end and which is interposed like a cam between the extension of the forked bracket and the plate, The brake pedal is pivotable by means of an external action between an unlocked state, in which the engagement means of the first end of the resilient plate is spaced from the wheel, and a locked state in which the engagement means of the first end of the resilient plate is urged against the wheel by the cam-like engaging portion of the brake pedal. This means that, by pressing down the operable end of the brake pedal, the castor gets its locked state according to the description above, and when the brake is released (which is explained below) the operable end of the brake pedal is moved upwards, wherein the engagement means of the first end of the resilient plate leaves its engagement with the wheel.

The parking brake further comprises a releasing device, which comprises an operable end and an opposite apply end, wherein the releasing device is slidingly arranged at a free end of the extension of the forked bracket. Thus, the releasing device is slidable in the extension direction between a first position, which corresponds to a locked state of the castor, and a second position, which corresponds to an unlocked state of the castor. The releasing device is arranged to release the brake pedal from locked state by that the releasing device further comprises a releasing slot arranged between the operable end and the apply end of the releasing device. The releasing end of the brake pedal projects into the releasing slot of the releasing device, and edges of the releasing slot are arranged to engage with the releasing end of the brake pedal, upon sliding the releasing device along the extension of the forked bracket.

Such a solution provides a cost efficient and safe solution of a castor with an easy access and quick releasing function for a parking brake of such castor. Further, a castor set up with the above design and with the "sliding" releasing device applied, utilizes that a short, substantially horizontal motion is enough to release the brake, and the overall design also enables a low total height of the castor, wherein there is no need of a lot of space above the forked bracket, i.e. between the extension of the forked bracket and the object, to which underside the castor is attached. Thereby, it is easy for the user to, despite little space between the castor and the object, to see and release the brake. Normally, a user just needs to kick with the foot in direction towards the releasing device, to release it, instead of trying to see and reach in over a release pedal for pressing it downwards or to push a release pedal or the release end of a brake pedal forwards, when this is positioned over the rear extension of the forked bracket (like in the cited art, presented above).

According to an embodiment, when the releasing device is in its first position (the locked state of the castor), the operable end of the releasing device projects in the extension direction further out from the free end of the extension compared to the projection of the operable end of the brake pedal in the extension direction. Such a solution makes sure that the brake is released in an easy manner if for example the castor is hit from the back (in the horizontal direction) as well as it is easy to access the release device when a user wants to release the brake.

According to an embodiment, when the releasing device is in its second position (the unlocked state of the castor), the operable end of the brake pedal projects in the extension direction further out from the free end of the extension compared to the projection of the operable end of the releasing device in the extension direction. Such a solution makes sure that the castor may be locked in an easy manner wherein it is easy to access the operable end of the brake pedal, when a user wants to brake the castor.

According to an embodiment, when the releasing device is in its first position (the locked state of the castor), the operable end of the releasing device is an outermost point of the castor. This means rearwards in the extension direction, relating to a motion direction of an object, to which the castor is attached, when moving the object forwards, wherein no other parts of the castor projects further out horizontally backwards than the operable end of the releasing device. Thereby, the releasing function is very easy to manage.

According to an embodiment, when the releasing device is in its second position (the unlocked state of the castor), the operable end of the brake pedal is an outermost point of the castor. This means rearwards in the extension direction, relating to a motion direction of an object, to which the castor is attached, when moving the object forwards, wherein no other parts of the castor projects further out horizontally backwards than the operable end of the brake pedal. Thereby, the braking function is very easy to manage.

According to an embodiment, the releasing device is resilient. This is a very positive property of the releasing device, since it may flex a bit, which makes it easy to install on the free end of the extension as well as it is not easily damaged by a hit or during use. One problem with prior art release devices of metal is that they are easily bent when subjected to a pressing force, for example downwards for release of the brake function, or when they are accidently hit by an external object. This is handled by the resilient release device. For example, the release device may be of resilient plastic or rubber.

According to an embodiment, the releasing device is U-shaped, wherein the apply end is open and arranged to be applied on the free end of the extension of the forked bracket, and the opposite operable end is closed and arranged to enclose the free end of the extension of the forked bracket. This enables that a castor set up with the above design but without a releasing device, may easily be complemented with the releasing device later, due to the "push-on" U-shaped design. The design of the releasing device further enables that no extra details are needed to apply and keep the releasing device in position on the free end of the extension of the forked bracket, which is far better and cheaper than existing solutions.

According to an embodiment, the releasing device comprises a cover part arranged to cover the slot such as the slot and the cover part forms an upwardly closed chamber which is arranged to accommodate and cover the releasing end of the brake pedal. The cover part may be a removeable cover or a cover which is an integrated part of the releasing device, where the upwardly closed chamber protects the releasing end of the brake pedal from dirt and moisture when it projects through the releasing slot of the releasing device. Edges of the releasing slot still are arranged to engage with the releasing end of the brake pedal, upon sliding the releasing device along the extension of the forked bracket. A nice looking and dirt protecting function is thereby received by the cover part of the releasing device.

According to an embodiment, the releasing device comprises marking indications which indicates a release direction of the releasing device, to unlock the lockable castor. For example, one or more arrows or the like may indicate a visual release direction, in which the releasing device is moved between the first position, which corresponds to a locked state of the castor, to the second position, which corresponds to the unlocked state of the castor.

According to an embodiment, the releasing device comprises a first signal color. For example, this may be a green color to indicate that the releasing device unlocks the brake of the castor.

According to an embodiment, the brake pedal comprises a second signal color. For example, this may be a red color to indicate that the brake pedal locks the brake of the castor. Preferably, the two above mentioned signal colors are used in combination, wherein the second signal color of the brake pedal differs from the first signal color of the releasing device.

According to an embodiment, the lockable castor further comprises an annular member fixed to the attachment means and connecting the attachment means to the top of the forked bracket, and further an upper ring of balls interposed between ball races defined between the attachment means and the top of the forked bracket and a lower ring of balls interposed between ball races defined between the top of the forked bracket and the annular member. Thereby, a swiveling function of the castor is enabled, where the castor may rotate relative the attachment means/the object to which the attachment means is attached.

According to an embodiment, the plate of the parking brake further comprises a second end opposite the first end, which extends forwardly below the top of the forked bracket, and which is arranged to cooperate with a toothed edge of the annular member to lock the forked bracket against rotation relative to the attachment means. Thus, a simultaneous locking of the swiveling function of the castor at the same time as rotational locking of the wheel relative the forked bracket is achieved by the same parking brake. Further, the release function also releasing the swivel-lock simultaneously as releasing the rotational locking of the wheel relative the forked bracket.

### Short description of the figures

The invention will now be described, by way of example, with reference to the accompanying figures in which:
Fig. 1a shows an isometric view of a lockable castor according to the invention in a first position, which corresponds to a locked state of the castor and Fig. 1b shows an isometric view of the lockable castor in a second position, which corresponds to an unlocked state of the castor.
Fig. 2a shows a side view of the inventive castor in its first position. Fig. 2b shows a section view of the castor of Fig. 2a and Fig. 2c shows a zoomed view of the upper part of the castor of Fig. 2b. In Fig. 2a-c, the inventive castor is as mentioned in its first position, which is the locked position.
Fig. 3a shows a side view of the inventive castor in its second position. Fig. 3b shows a section view of the castor of Fig. 3a and Fig. 3c shows a zoomed view of the upper part of the castor of Fig. 3b. In Fig. 3a-c, the inventive castor is as mentioned in its second position, which is the unlocked position
Fig. 4a shows a side view of the castor in its first position and Fig. 4b shows a section view of the castor of Fig. 4a.
Fig. 4c shows a side view of the castor in its second position and Fig. 4d shows a section view of the castor of Fig. 4c.
Fig. 5 shows a view of the inventive castor from below, but with the wheel of the castor removed for better visibility.
Fig 6a shows an alternative embodiment of a releasing device of the inventive castor and Fig. 6b shows yet another alternative embodiment of a releasing device of the castor.

### Description of embodiments

In the following, a detailed description of a preferred embodiment of a XX according to the invention is described with reference to the accompanying figures. The invention is not limited to the figures.

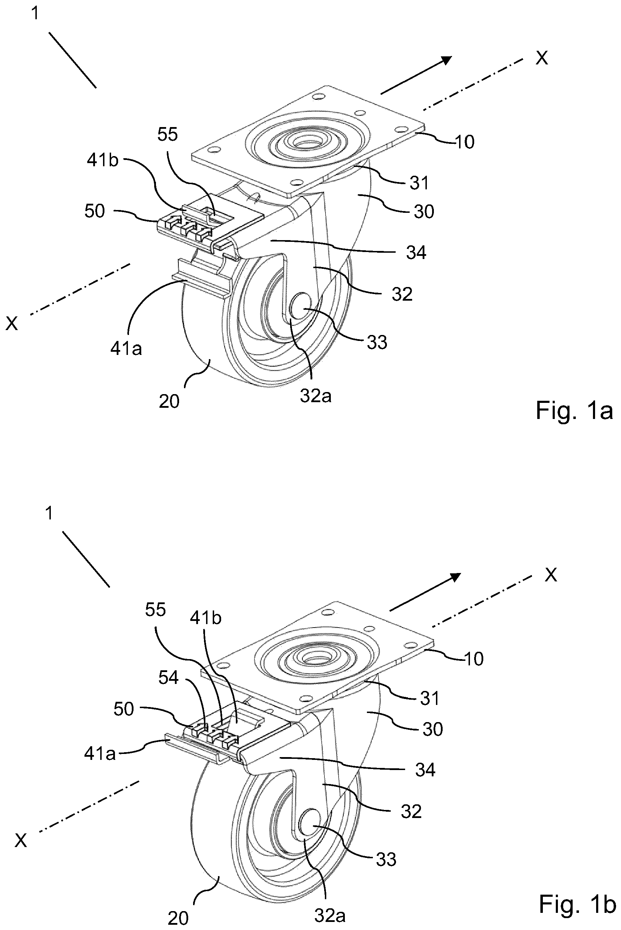

Fig. 1a shows an isometric view of a lockable castor 1 according to the invention in a first position, which corresponds to a locked state of the castor 1 and Fig. 1b shows an isometric view of the lockable castor 1 in a second position, which corresponds to an unlocked state of the castor 1. The arrow pointing in the right direction of the figures indicates a travelling direction when the castor 1 is used in a normal manner. The lockable castor 1 is arranged for attachment to an underside of an object, such as a cart or a trolley or the like and for example if the cart is pushed, the travelling direction of course is the forward direction (indicated with the arrow). The castor 1 comprises an attachment means 10 which is arranged for attachment to the underside of the object, and in the shown embodiment, the attachment means 10 is arranged as a rectangular steel plate with a number of holes arranged for screws, which may be used for attachment om the castor 1 to the underside of the object. A forked bracket 30 is attached to the attachment means 10 in swiveling manner (explained further below), and the forked bracket 30 comprises a top 31 which faces the attachment means 10 and further two projecting wings 32, which project downwards in direction away from the top 31 and the attachment means 10. The wings 32 carries a pin 33 at their lower ends 32a which rotatably supports a wheel 20, which is rotatable relative the forked bracket. The forked bracket 30 further comprises an extension 34, which extends rearwardly above the wheel 20 in an extension direction X. Preferably, the top 31, the wings 32 and the extension 34 are integrally formed as one detail.

The castor 1 further comprises a parking brake assembly which comprises a brake pedal 41 with an operable end 41a which projects from the extension 34 of the forked bracket 30 and a releasing end 41b opposite the operable end 41a. The operable end is intended for a user to press down for locking the castor and which may be seen in Fig. 1a and the releasing end 41b is intended to release the castor 1 from the locked position to an unlocked position, when subjected to a pressing force horizontally along the extension 34 of the forked bracket 30 (which in the figures are when the releasing end is pushed to the right which is a pressing force in the opposite direction compared to when locking the castor). The releasing end 41b projects through a guide slot 35 (not visible) of the extension 34 of the forked bracket 30.

The parking brake assembly further comprises a releasing device 50 which is slidingly arranged at the extension 34 of the forked bracket 30, between a first position, which corresponds to the locked state of the castor 1, and a second position, which corresponds to the unlocked state of the castor 1. The releasing device 50 is arranged to release the brake pedal 41 from the locked state by that the releasing device 50 further comprises a releasing slot 55 into which the releasing end 41b of the brake pedal 41 projects, and edges of the releasing slot 55 are arranged to engage with the releasing end 41b of the brake pedal 41, upon sliding the releasing device 50 along the extension 34 of the forked bracket 30. Preferably, but not necessarily, the releasing device 50 comprises marking indications 54, which shows a direction of how to push the releasing device 50 to release the braking function of the castor 1.

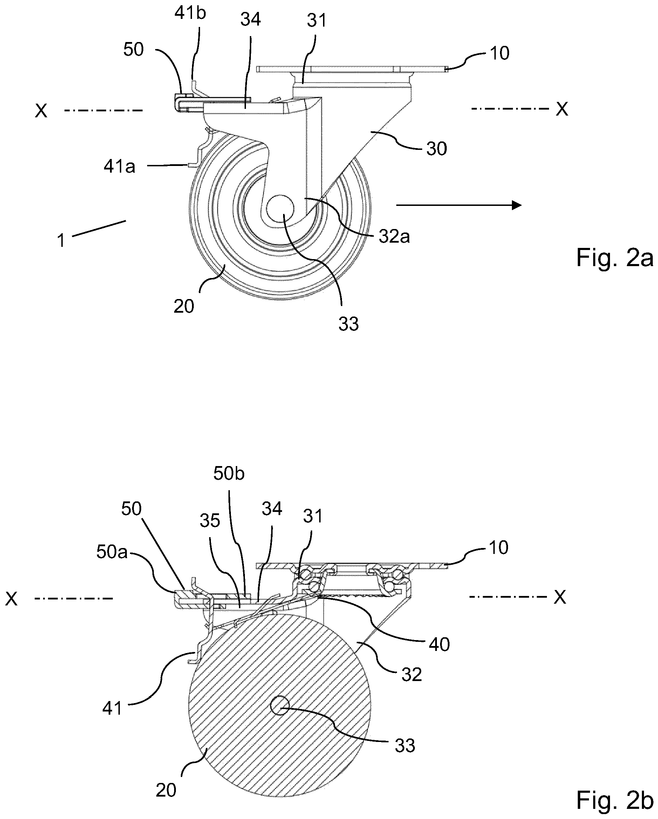

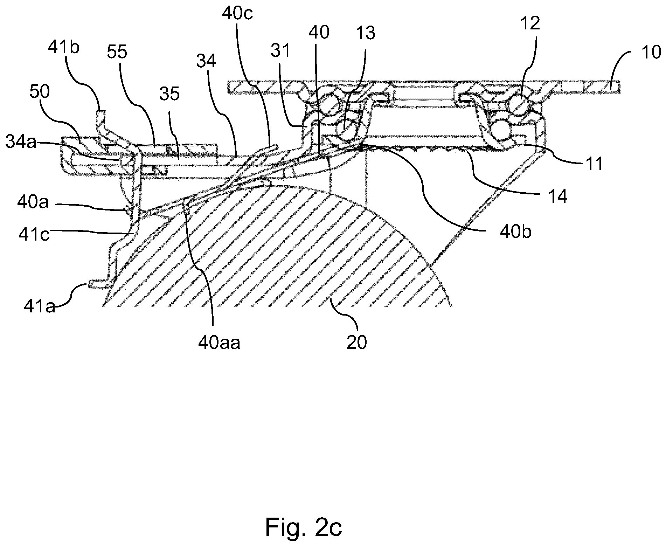

In Fig 1.a, the castor 1 is in tis locked position, where the operating end 41a of the brake pedal 41 is pressed downwards and is in a lower position and close to the wheel 20, which is a transverse direction relative the extension direction X of the extension 34, preferably about 90° relative the extension direction X (the locking function will be explained in relation to Figs. 2-c). The opposite releasing end 41b of the brake pedal 41 is a seen in a projected state, almost vertically upwards relative the extension 34 of the forked bracket 30, and projects out from the releasing slot 55 of the releasing device 50. When pressing the releasing device 50 in the forward direction indicated with the marking indications 54 of the releasing device 50, the releasing device slides along the extension 34 and pushes the releasing end 41b of the brake pedal 41 to the right, wherein the brake is released, which may be seen in Fig. 1b. In this state, the releasing end 41b of the brake pedal 41 is in a position which still projects into the releasing slot 55 of the releasing device 50, but more or less along the extension 34 or close to the same, as well as close to/along an upper side of the releasing device 50.

Fig. 2a-b shows a side view and a section view of the castor 1 in its first position, which is the locked position. Referring to the use of the castor 1, the attachment means 10, in the form of a steel plate, is the uppermost detail and is substantially horizontal. The arrow indicates a forward direction, and the projecting wings 32 of the forked bracket 30 are inclined backwards and the extension projects backwards away from the top 31/the attachment means 10, over the wheel 20. Since the castor 1 preferably is swiveling arranged relative the attachment means 10, the forked bracket 30 may rotate relative the attachment means 10, wherein the forked bracket 30 always turns around such as the extension 34 projects rearwards, when the wheel 20 starts to rotate upon pushing the object on which the castor 1 is attached. A cart may of course have for example four rotationally locked wheels (with no swiveling function), but it is more common that at least the two rear castors have a swiveling function, to be able to steer the cart.

The brake function of the castor 1 may be understood when looking at Fig. 2b-c. Below the attachment means 10, an annular member 11 is arranged and which is fixed to and connecting the attachment means 10 to the top 31 of the forked bracket 30. An upper ring of balls 12 is interposed between ball races defined between the attachment means 10 and the top 31, and a lower ring of balls 13 is interposed between ball races defined between the top 31 and the annular member 11. This enables the swiveling function of the castor 1. The parking brake assembly of the castor 1 comprises a plate 40, which is resiliently arranged between the wings 32 of the forked bracket 30 above the wheel 20. The plate 40 comprises a first end 40a, which extends rearwardly below the extension 34 of the forked bracket 30 and the first end 40a is adapted to be operated to lock the wheel 20 against rotation relative to the forked bracket 30. The plate 40 further comprises a second end 40b opposite the first end 40a, which second end 40b extends below the top 31 of the forked bracket 30, The second end 40b is arranged to cooperate with a toothed edge 14 of the annular member 11 to lock the forked bracket 30 against rotation relative to the attachment means 10. Close the first end 40a, an engagement means 40aa is arranged, which has the function to engage with the wheel 20 to prevent rotation of the wheel 20 relative the forked bracket 30.

Between the engagement means 40aa and the second end 40b of the plate 40, a spring arm 40c is arranged. In the figures, it looks like it projects upwards through the extension 34, but this is an error in the drawings (and may not be fixed). This symbolizes that the spring arm 40c is spring-loaded and it is the unloaded condition of the spring arm 40c which is visible. Instead, the plate 40 and its spring arm 40c is resiliently arranged and spring-loaded between the wings, wherein the spring arm 40c is urged against the underside of the extension 34 of the forked bracket 30 to entail an easy releasing of the brake function. The plate 40 may be attached to an axis extending between the wings 32 or may be resiliently kept between the wings 32 by a protrusion or a recess in the respective wing 32, which engages with sides of the plate 40, at a pivot point, which enables the first and second ends 40a, 40b of the plate 40 to flex relative the forked bracket 30.

When a user shall brake the castor 1, he or she presses the operable end 41a of the brake pedal 41 downwards, wherein an engaging portion 41c, which is arranged between the operable end 41a and the releasing end 41b of the brake pedal 41, engages with the first end 40a of the plate 40, which flexes downwards and the engagement means 40aa engages with the wheel 20 and prevents it from rotating. The engaging portion 41c is interposed like a cam between the extension 34 of the forked bracket 30 and the first end 40a of the plate 40, and thereby pressing the first end 40a downwards, upon an external action/a pressing on the operable end 41a of the brake pedal 41. The second end 40b of the plate 40 simultaneously engages with the toothed edge 14 of the annular member 11, to lock the forked bracket 30 against rotation relative to the attachment means 10, as mentioned above. A total lock of the castor is achieved, wherein the wheel 20 is prevented from rotating and the forked bracket 30 is prevented from swiveling.

The releasing device 50 is as mentioned slidingly arranged at a free end 34a of the extension 34 of the forked bracket 30 and preferably is U-shaped, wherein an apply end 50b is applied on the free end 34a of the extension 34 such as upper and lower shanks of the releasing device encloses the free end 34a. An operable end 50a of the releasing device 50 is arranged opposite the apply end 50b and encapsules and protects the free end 34a of the extension 34 of the forked bracket 30. The extension 34 also comprises a guide slot 35, positioned above the wheel 20, which guide slot 35 is arranged to accommodate the releasing end 41b of the brake pedal 41. The releasing slot 55 of the releasing device 50 is so to speak slidingly arranged relative the guide slot 35 of the extension 34 of the forked bracket 30, edges of the releasing slot 55 are arranged to engage with the releasing end 41b of the brake pedal 41, which projects through the guide slot 35 of the extension 34 and the releasing slot 55 of the releasing device 50. In the first locked position of the castor 1, the operable end 41a is pressed down, wherein the brake pedal 41 gets a more or less vertical state, wherein the releasing end 41b simultaneously presses the releasing device 50 to its locked state (left in the figures), wherein the releasing end 41b projects almost vertically upwards through guide slot 35 of the extension 34 and the releasing slot 55 of the releasing device (50).

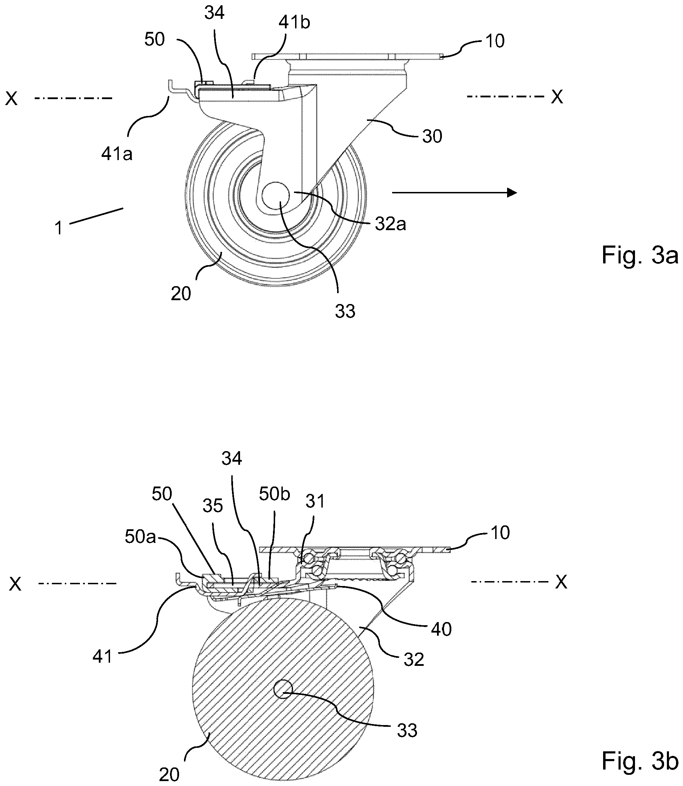

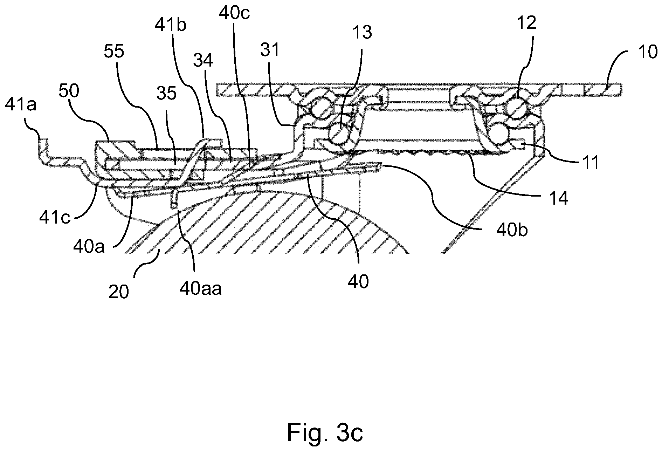

Fig. 3a-c shows a side view, a section view and a zoomed view of the castor 1 in its second position, which is the unlocked position. In this position, the operable end 41a of the brake pedal 41 projects from the extension 34 of the forked bracket 30 along the extension direction X. The opposite releasing end 41b of the brake pedal 41 projects trough the guide slot 35 of the extension and the releasing slot 55 of the releasing device, along the extension 34 in the opposite direction relative operable end 41a of the brake pedal 41. To put the castor 1 to this released position as visible in Fig. 3a-c, the operable end 50a of the releasing device 50 is pressed towards attachment means, that is in the forward direction (to the right in the figures), wherein the edge of the releasing slot 55 which is closest to the operable end 50a pushes the releasing end 41b of the brake pedal 41 (from the position visible at Figs. 2a-c) in the forward direction (towards the attachment means 10). By that, the brake pedal 41 rotates clock wise (relating to the figures) and the spring-force of the spring arm 40c of the plate 40 makes the motion even easier and quicker, wherein the engagement means 40aa of the operable end 40a of the plate 40 leaves the wheel 20 and the wheel 20 may rotate. At the same time, second end 40b of the plate 40 leaves its engagement with the toothed edge 14 of the annular member, and the forked bracket 30 may swivel (rotate) relative the attachment means 10, which means that the total lock is released and for example a cart equipped with castors 1 may now be moved and steered to another location, if wanted. As in Fig. 2b and 2c, the spring arm 40c is not extending through the extension 34 as wrongly showed, but instead is clamped under the underside of the extension 34 and between the wings 32.

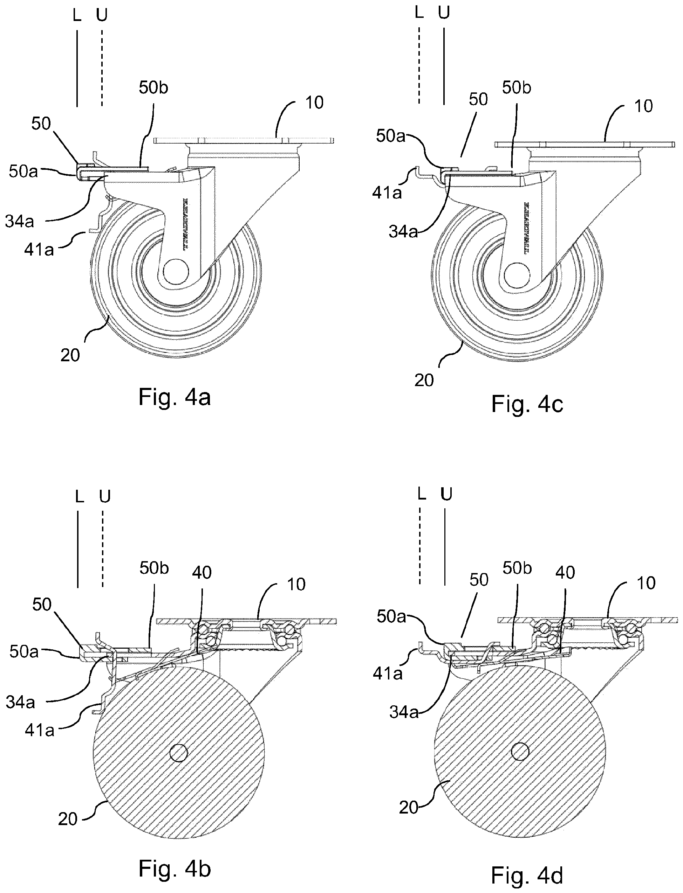

Fig. 4a-b shows a side view and a section view of the castor in its first locked position, which is shown by a solid, vertical line L, which indicates the position of the releasing device 50 at the locked position of the castor 1. At this position, the operable end 50a of the releasing device 50 projects in the extension direction X, backwards and further out from the free end 34a of the extension 34, compared to the projection of the operable end 41a of the brake pedal 41 rearwards, in the extension direction X, when comparing the vertical positions of the outermost ends/points of the releasing device 50 and the brake pedal 41.

Fig. 4c-d shows similar views of the castor 1 as in Fig. 4a-b, namely a side view and a section view of the castor but in its second unlocked position, which is shown by a solid, vertical line U, which indicates the position of the releasing device 50 at the unlocked position of the castor 1. At this position, the operable end 41a of the brake pedal 41 projects in the extension direction X, backwards and further out from the free end 34a of the extension 34, compared to the operable end 50a of the releasing device 50 in the extension direction X, when comparing the vertical positions of the outermost ends/points of the releasing device 50 and the brake pedal 41. The dotted lines in Figs. 4a-d indicates the not "active" position of the releasing device and it may be seen that a very short motion of the releasing device 50 is needed to unlock the brake of the castor 1. And due to the spring-loaded spring arm 40c of the resiliently arranged plate 40, the releasing action is assisted by the spring-force of the spring arm 40c. Altogether, an quick and easy release of the brake of the castor 1 is achieved by a pressing in the horizontal, forward direction, why an easy-handled function is achieved. The solution also provides easy access even if the distance between the extension 34 of the forked bracket 30 and the object/attachment means 10 is short, which is positive for safety and function of the releasing function.

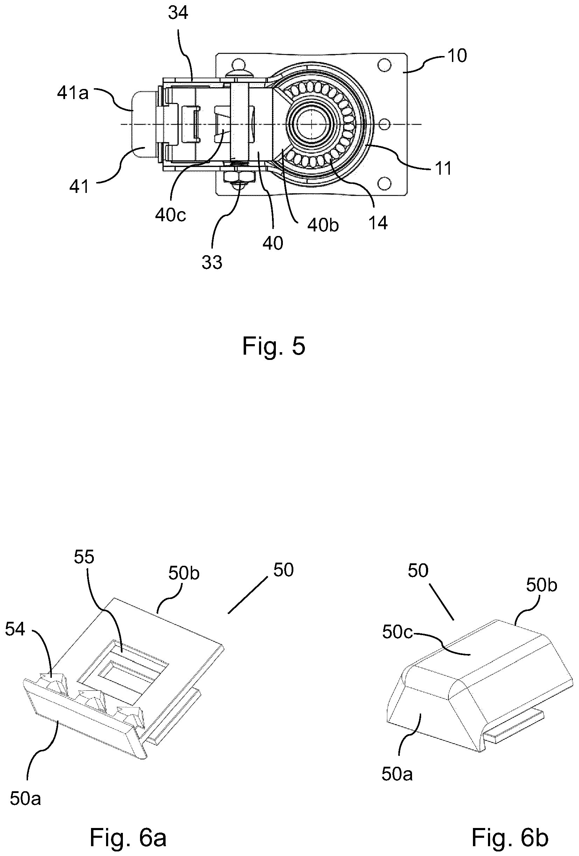

Fig. 5 shows a view of the inventive castor 1 from below, but with the wheel of the castor 1 removed for better visibility. The operable end 41a of the brake pedal 41 protrudes to the left in the figure, which means that this is the unlocked position of the castor 1. The plate 40 with its spring arm 40c and second end 40b is visible in its arranged position above the wheel carrying pin 33 and the second end 40b of the plate 40 is not engaged with the toothed edge 14 of the annular member 11, which is visible as a number of recesses arranged 360° around the annular member 11.

Fig 6a shows an alternative embodiment of a releasing device 50 of the inventive castor 1 and Fig. 6b shows yet another alternative embodiment of a releasing device 50 of the castor 1. In Figs. 1-4, a first embodiment of the releasing device 50 is shown and the alternative design shown in Fig. 6a has more or less a similar design, but a slightly different operable end 50a and different design of the marking indications 54. This type is as can be seen open upwards and the operating end 50a may be equipped with a logo, text or the like, if wanted. As mentioned, the releasing device 50 is U-shaped, wherein the apply end 50b is open and arranged to be applied on the free end 34a of the extension 34 of the forked bracket 30, and the opposite operable end 50a is closed and arranged to enclose the free end 34a of the extension 34 of the forked bracket 30. It may also be seen that the releasing slot 55 actually may be two slots, one arranged in the lower shank of the releasing device 50 and one arranged in the upper shank of the releasing device 50. The alternative embodiment of the releasing device 50 shown in Fig. 6b has a similar design regarding the shanks and releasing slot/slots 55 but comprises a cover part 50c arranged to cover the upper slot 55 such as the slot 55 and the cover part 50c forms an upwardly closed chamber which is arranged to accommodate and cover the releasing end 41b of the brake pedal 41. The cover 50c is an integrated part of the releasing device 50, where the upwardly closed chamber protects the releasing end 41b of the brake pedal 41 from dirt and moisture when it projects through the releasing slot 55 of the releasing device 50. Edges of the releasing slot 55 still are arranged to engage with the releasing end 41b of the brake pedal 41, upon sliding the releasing device 50 along the extension X of the forked bracket 34. A nice looking and dirt protecting function is thereby received by the cover part 50c of the releasing device 50.

Further, the releasing device 50, preferably is resilient. This is a positive property, since it may flex a bit, which makes it easy to install on the free end 34a of the extension 34 of the forked bracket 30 since it may be threaded onto the free end 34a and over the releasing end 41b of the brake pedal 41, for installation of the release function of a castor without this function. This means that a producer may produce all castors with the design with a guide slot 35 in the extension 34, and then upon demand apply a releasing device 50, which is very cost efficient. Further, the resilient material provides that it is not easy to damage the releasing device 50 or the releasing end 41b of the brake pedal 41 by accident. For example, the releasing device 50 may be of resilient plastic or rubber.

The marking indications 54 could for example be indications in the form of one or more arrows for a visual indication of the release direction of the parking brake of the castor 1.

Further, the releasing device 50 may comprise a first signal color, for example green, to indicate that the releasing device 50 unlocks the parking brake of the castor 1. Preferably, the brake pedal 41, or at least the operating end 41a of the brake pedal 41 comprises a second signal color, for example a red color, to indicate that the brake pedal 41 locks the parking brake of the castor 1. Preferably, the two above signal colors are used in combination, wherein the second signal color of the brake pedal differs from the first signal color of the releasing device.

## Claims

1. A lockable castor (1) arranged for attachment to an underside of an object, the castor (1) comprising:
an attachment means (10) arranged for attachment to the underside of the object,
a wheel (20),
a forked bracket (30) which comprises a top (31) which faces the attachment means (10) and further two projecting wings (32) which project downwards in direction away from the top (31), wherein the wings (32) carry a pin (33) at their lower ends (32a) for rotatably supporting the wheel (20), wherein the forked bracket (30) comprises an extension (34) which extends above the wheel (20) in an extension direction (X), and
a parking brake, the parking brake comprising:
a plate (40) resiliently arranged between the wings (32) of the forked bracket (30) above the wheel (20), wherein the plate (40) comprises a first end (40a) which extends below the extension (34) of the forked bracket (30) and which is adapted to be operated to lock the wheel (20) against rotation relative to the forked bracket (30) by an engagement means (40aa),
a brake pedal (41) arranged to be in contact with the first end (40a) of the plate (40), which brake pedal (41) comprises an operable end (41a) which projects from the extension (34) of the forked bracket (30) and a releasing end (41b) opposite the operable end (41a), wherein the brake pedal (41) further comprises an engaging portion (41c) arranged between the operable end (41a) and the releasing end (41b) and which is interposed like a cam between the extension (34) of the forked bracket (30) and the plate (40), wherein the brake pedal (41) is pivotable by means of an external action, between an unlocked state, in which the engagement means (40aa) of the first end (40a) of the resilient plate (40) is spaced from the wheel (20), and a locked state in which the engagement means (40aa) of the first end (40a) of the resilient plate (40) is urged against the wheel (20) by the cam-like engaging portion (41c) of the brake pedal (41),
and a releasing device (50) which comprises an operable end (50a) and an opposite apply end (50b), wherein the releasing device (50) is slidingly arranged at a free end (34a) of the extension (34) of the forked bracket (30) and slidable in the extension direction (X) between a first position (L), which corresponds to a locked state of the castor (1), and a second position (U), which corresponds to an unlocked state of the castor (1), wherein the releasing device (50) is arranged to release the brake pedal (41) from the locked state by that; the castor being **characterised in that** the extension (34) of the forked bracket (30) comprises a guide slot (35) positioned above the wheel (20), **in that** the releasing end (41b) of the brake pedal (41) projects through the guide slot (35), and **in that** the releasing device (50) further comprises a releasing slot (55) arranged between the operable end (50a) and the apply end (50b), wherein the releasing end (41b) of the brake pedal (41) projects into the releasing slot (55) of the releasing device (50), and edges of the releasing slot (55) are arranged to engage with the releasing end (41b) of the brake pedal (41), upon sliding the releasing device (50) along the extension (34) of the forked bracket (30).

2. Lockable castor (1) according to claim 1, wherein, when the releasing device (50) is in its first position (L), the operable end (50a) of the releasing device (50) projects in the extension direction (X) further out from the free end (34a) of the extension (34) compared to the projection of the operable end (41a) of the brake pedal (41) in the extension direction (X).

3. Lockable castor (1) according to claim 1 or 2, wherein, when the releasing device (50) is in its second position (U), the operable end (41a) of the brake pedal (41) projects in the extension direction (X) further out from the free end (34a) of the extension (34) compared to the projection of the operable end (50a) of the releasing device (50) in the extension direction (X).

4. Lockable castor (1) according to any of the preceding claims, when the releasing device (50) is in its first position (L), the operable end (50a) of the releasing device (50) is an outermost point of the castor (1).

5. Lockable castor (1) according to any of the preceding claims, wherein, when the releasing device (50) is in its second position (U), the operable end (41a) of the brake pedal (41) is an outermost point of the castor (1).

6. Lockable castor (1) according to any of the preceding claims, wherein the releasing device (50) is resilient.

7. Lockable castor (1) according to any of the preceding claims, wherein the releasing device (50) is U-shaped, wherein the apply end (50b) is open and arranged to be applied on the free end (34a) of the extension (34) of the forked bracket (30), and the opposite operable end (50a) is closed and arranged to enclose the free end (34a) of the extension (34) of the forked bracket (30).

8. Lockable castor (1) according to any of the preceding claims, wherein the releasing device (50) comprises a cover part (50c) arranged to cover the slot (55) such as the slot (55) and the cover part (50c) forms an upwardly closed chamber which is arranged to accommodate and cover the releasing end (41b) of the brake pedal (41).

9. Lockable castor (1) according to any of the preceding claims, wherein the releasing device (50) comprises marking indications (54) which indicates a release direction of the releasing device (50), to unlock the lockable castor (1).

10. Lockable castor (1) according to any of the preceding claims, wherein the releasing device (50) comprises a first signal color.

11. Lockable castor (1) according to any of the preceding claims, wherein the brake pedal (41) comprises a second signal color.

12. Lockable castor (1) according to any of the preceding claims, further comprising:
an annular member (11) fixed to the attachment means (10) and connecting the attachment means (10) to the top (31) of the forked bracket (30),
an upper ring of balls (12) interposed between ball races defined between the attachment means (10) and the top (31) of the forked bracket (30) and a lower ring of balls (13) interposed between ball races defined between the top (31) of the forked bracket (30) and the annular member (11).

13. Lockable castor (1) according to claim 12, wherein the plate (40) of the parking brake further comprises a second end (40b) opposite the first end (40a) and which extends below the top (31) of the forked bracket (30) and which is arranged to cooperate with a toothed edge (14) of the annular member (11) to lock the forked bracket (30) against rotation relative to the attachment means (10).

## Patentansprüche

1. Verriegelbare Lenkrolle (1), die zur Befestigung an einer Unterseite eines Objekts angeordnet ist, wobei die Lenkrolle (1) Folgendes umfasst:
ein Befestigungsmittel (10), das zur Befestigung an der Unterseite des Objekts angeordnet ist,
ein Rad (20),
eine Gabelhalterung (30), die ein dem Befestigungsmittel (10) zugewandtes Oberteil (31) und ferner zwei abstehende Flügel (32), die in Richtung weg vom Oberteil (31) nach unten abstehen, aufweist, wobei die Flügel (32) an ihren unteren Enden (32a) einen Stift (33) zur drehbaren Lagerung des Rades (20) tragen, wobei die Gabelhalterung (30) eine Verlängerung (34) aufweist, die sich in einer Verlängerungsrichtung (X) oberhalb des Rades (20) erstreckt, und
eine Feststellbremse, wobei die Feststellbremse Folgendes umfasst:
eine Platte (40), die elastisch zwischen den Flügeln (32) der Gabelhalterung (30) oberhalb des Rades (20) angeordnet ist, wobei die Platte (40) ein erstes Ende (40a) umfasst, das sich unterhalb der Verlängerung (34) der Gabelhalterung (30) erstreckt und dazu angepasst ist, betätigt zu werden, um das Rad (20) durch ein Eingriffsmittel (40aa) gegen eine Drehung relativ zur Gabelhalterung (30) zu verriegeln,
ein Bremspedal (41), das so angeordnet ist, dass es mit dem ersten Ende (40a) der Platte (40) in Kontakt steht, wobei das Bremspedal (41) ein betätigbares Ende (41a), das von der Verlängerung (34) der Gabelhalterung (30) absteht, und ein lösendes Ende (41b) gegenüber dem betätigbaren Ende (41a) umfasst,
wobei das Bremspedal (41) ferner einen Eingriffsabschnitt (41c) umfasst, der zwischen dem betätigbaren Ende (41a) und dem lösenden Ende (41b) angeordnet ist und der wie ein Nocken zwischen der Verlängerung (34) der Gabelhalterung (30) und der Platte (40) positioniert ist, wobei das Bremspedal (41) mittels einer externen Aktion zwischen einem entriegelten Zustand, in dem das Eingriffsmittel (40aa) des ersten Endes (40a) von der elastischen Platte (40) von dem Rad (20) beabstandet ist, und einem verriegelten Zustand, in dem das Eingriffsmittel (40aa) des ersten Endes (40a) der elastischen Platte (40) durch den nockenartigen Eingriffsabschnitt (41c) des Bremspedals (41) gegen das Rad (20) gedrückt wird, schwenkbar ist,
und eine Lösevorrichtung (50), die ein betätigbares Ende (50a) und ein gegenüberliegendes Anlegeende (50b) umfasst, wobei die Lösevorrichtung (50) gleitend an einem freien Ende (34a) der Verlängerung (34) der Gabelhalterung (30) angeordnet und in der Verlängerungsrichtung (X) zwischen einer ersten Position (L), die einem verriegelten Zustand der Lenkrolle (1) entspricht, und einer zweiten Position (U), die einem entriegelten Zustand der Lenkrolle (1) entspricht, verschiebbar ist, wobei die Lösevorrichtung (50) angeordnet ist, um das Bremspedal (41) dadurch aus dem verriegelten Zustand zu lösen;
wobei die Lenkrolle **dadurch gekennzeichnet ist, dass** die Verlängerung (34) der Gabelhalterung (30) einen Führungsschlitz (35) umfasst, der über dem Rad (20) positioniert ist, dadurch, dass das Löseende (41b) des Bremspedals (41) durch den Führungsschlitz (35) ragt, und dadurch, dass die Lösevorrichtung (50) ferner einen Löseschlitz (55) umfasst, der zwischen dem betätigbaren Ende (50a) und dem Anlegeende (50b) angeordnet ist, wobei das Löseende (41b) des Bremspedals (41) in den Löseschlitz (55) der Lösevorrichtung (50) hineinragt, und wobei Kanten des Löseschlitzes (55) so angeordnet sind, dass sie mit dem Löseende (41b) des Bremspedals (41) in Eingriff kommen, wenn die Lösevorrichtung (50) entlang der Verlängerung (34) der Gabelhalterung (30) verschoben wird.

2. Verriegelbare Lenkrolle (1) nach Anspruch 1, wobei, wenn sich die Lösevorrichtung (50) in ihrer ersten Position (L) befindet, das betätigbare Ende (50a) der Lösevorrichtung (50) in der Verlängerungsrichtung (X) weiter aus dem freien Ende (34a) der Verlängerung (34) herausragt, verglichen mit dem Herausragen des betätigbaren Endes (41a) des Bremspedals (41) in der Verlängerungsrichtung (X).

3. Verriegelbare Lenkrolle (1) nach Anspruch 1 oder 2, wobei, wenn sich die Lösevorrichtung (50) in ihrer zweiten Position (U) befindet, das betätigbare Ende (41a) des Bremspedals (41) in Verlängerungsrichtung (X) weiter aus dem freien Ende (34a) der Verlängerung (34) herausragt, verglichen mit dem Herausragen des betätigbaren Endes (50a) der Lösevorrichtung (50) in der Verlängerungsrichtung (X).

4. Verriegelbare Lenkrolle (1) nach einem der vorhergehenden Ansprüche, wobei, wenn sich die Lösevorrichtung (50) in ihrer ersten Position (L) befindet, das betätigbare Ende (50a) der Lösevorrichtung (50) ein äußerster Punkt der Lenkrolle (1) ist.

5. Verriegelbare Lenkrolle (1) nach einem der vorhergehenden Ansprüche, wobei, wenn sich die Lösevorrichtung (50) in ihrer zweiten Position (U) befindet, das betätigbare Ende (41a) des Bremspedals (41) ein äußerster Punkt der Lenkrolle (1) ist.

6. Verriegelbare Lenkrolle (1) nach einem der vorhergehenden Ansprüche, wobei die Lösevorrichtung (50) elastisch ist.

7. Verriegelbare Lenkrolle (1) nach einem der vorhergehenden Ansprüche, wobei die Lösevorrichtung (50) U-förmig ist, wobei das Anlegeende (50b) offen und dazu angeordnet ist, an dem freien Ende (34a) der Verlängerung (34) der Gabelhalterung (30) angebracht zu werden, und das gegenüberliegende betätigbare Ende (50a) geschlossen und dazu angeordnet ist, das freie Ende (34a) der Verlängerung (34) der Gabelhalterung (30) zu umschließen.

8. Verriegelbare Lenkrolle (1) nach einem der vorhergehenden Ansprüche, wobei die Lösevorrichtung (50) ein Abdeckteil (50c) umfasst, das dazu angeordnet ist, den Schlitz (55), wie etwa den Schlitz (55), abzudecken, und wobei das Abdeckteil (50c) eine nach oben geschlossene Kammer bildet, die dazu angeordnet ist, das Löseende (41b) des Bremspedals (41) aufzunehmen und abzudecken.

9. Verriegelbare Lenkrolle (1) nach einem der vorhergehenden Ansprüche, wobei die Lösevorrichtung (50) Markierungsangaben (54) umfasst, die eine Löserichtung der Lösevorrichtung (50) angeben, um die verriegelbare Lenkrolle (1) zu entriegeln.

10. Verriegelbare Lenkrolle (1) nach einem der vorhergehenden Ansprüche, wobei die Lösevorrichtung (50) eine erste Signalfarbe umfasst.

11. Verriegelbare Lenkrolle (1) nach einem der vorhergehenden Ansprüche, wobei das Bremspedal (41) eine zweite Signalfarbe umfasst.

12. Verriegelbare Lenkrolle (1) nach einem der vorhergehenden Ansprüche, die ferner Folgendes umfasst:
ein ringförmiges Element (11), das am Befestigungsmittel (10) befestigt ist und das Befestigungsmittel (10) mit dem Oberteil (31) der Gabelhalterung (30) verbindet,
ein oberer Ring von Kugeln (12), angeordnet zwischen den Kugelbahnen, die zwischen dem Befestigungsmittel (10) und dem Oberteil (31) der Gabelhalterung (30) definiert sind, und ein unterer Ring von Kugeln (13), angeordnet zwischen den Kugelbahnen, die zwischen dem Oberteil (31) der Gabelhalterung (30) und dem ringförmigen Element (11) definiert sind.

13. Verriegelbare Lenkrolle (1) nach Anspruch 12, wobei die Platte (40) der Feststellbremse ferner ein zweites Ende (40b) gegenüber dem ersten Ende (40a) umfasst, das sich unterhalb des Oberteils (31) der Gabelhalterung (30) erstreckt und dazu angeordnet ist, mit einer Zahnkante (14) des ringförmigen Elements (11) zusammenzuwirken, um die Gabelhalterung (30) gegen eine Drehung relativ zu dem Befestigungsmittel (10) zu verriegeln.

## Revendications

1. Roulette verrouillable (1) agencée pour être attachée à une face inférieure d'un objet, la roulette (1) comprenant :
un moyen d'attache (10) agencé pour être attaché à la face inférieure de l'objet,
une roue (20),
un support en fourche (30) qui comprend un dessus (31) qui fait face au moyen d'attache (10) et plus loin deux ailes en saillie (32) qui font saillie vers le bas dans une direction à l'écart du dessus (31), dans laquelle les ailes (32) portent une broche (33) au niveau de leurs extrémités inférieures (32a) pour soutenir de manière rotative la roue (20), dans laquelle le support en fourche (30) comprend une extension (34) qui s'étend au-dessus de la roue (20) dans une direction d'extension (X), et
un frein de stationnement, le frein de stationnement comprenant :
une plaque (40) agencée de manière élastique entre les ailes (32) du support en fourche (30) au-dessus de la roue (20), dans laquelle la plaque (40) comprend une première extrémité (40a) qui s'étend sous l'extension (34) du support en fourche (30) et qui est conçue pour être actionnée pour verrouiller la roue (20) contre une rotation relativement au support en fourche (30) par un moyen de mise en prise (40aa),
une pédale de frein (41) agencée pour être en contact avec la première extrémité (40a) de la plaque (40), laquelle pédale de frein (41) comprend une extrémité pouvant être actionnée (41a) qui fait saillie à partir de l'extension (34) du support en fourche (30) et une extrémité de libération (41b) opposée à l'extrémité pouvant être actionnée (41a),
dans laquelle la pédale de frein (41) comprend en outre une portion de mise en prise (41c) agencée entre l'extrémité pouvant être actionnée (41a) et l'extrémité de libération (41b) et qui est interposée comme une came entre l'extension (34) du support en fourche (30) et la plaque (40), dans laquelle la pédale de frein (41) peut pivoter au moyen d'une action externe, entre un état déverrouillé, dans lequel le moyen de mise en prise (40aa) de la première extrémité (40a) de la plaque élastique (40) est espacé de la roue (20), et un état verrouillé dans lequel le moyen de mise en prise (40aa) de la première extrémité (40a) de la plaque élastique (40) est poussé contre la roue (20) par la portion de mise en prise de type came (41c) de la pédale de frein (41),
et un dispositif de libération (50) qui comprend une extrémité pouvant être actionnée (50a) et une extrémité d'application opposée (50b), dans laquelle le dispositif de libération (50) est agencé de manière coulissante au niveau d'une extrémité libre (34a) de l'extension (34) du support en fourche (30) et pouvant coulisser dans la direction d'extension (X) entre une première position (L), qui correspond à un état verrouillé de la roulette (1), et une deuxième position (U), qui correspond à un état déverrouillé de la roulette (1), dans laquelle le dispositif de libération (50) est agencé pour libérer la pédale de frein (41) de l'état verrouillé par le fait que ;
la roulette étant **caractérisée en ce que** l'extension (34) du support en fourche (30) comprend une fente de guidage (35) positionnée au-dessus de la roue (20), **en ce que** l'extrémité de libération (41b) de la pédale de frein (41) fait saillie à travers la fente de guidage (35), et **en ce que** le dispositif de libération (50) comprend en outre une fente de libération (55) agencée entre l'extrémité pouvant être actionnée (50a) et l'extrémité d'application (50b), dans laquelle l'extrémité de libération (41b) de la pédale de frein (41) fait saillie dans la fente de libération (55) du dispositif de libération (50), et des bords de la fente de libération (55) sont agencés pour se mettre en prise avec l'extrémité de libération (41b) de la pédale de frein (41), lors du coulissement du dispositif de libération (50) le long de l'extension (34) du support en fourche (30).

2. Roulette verrouillable (1) selon la revendication 1, dans laquelle, lorsque le dispositif de libération (50) est dans sa première position (L), l'extrémité pouvant être actionnée (50a) du dispositif de libération (50) fait saillie dans la direction d'extension (X) plus loin vers l'extérieur à partir de l'extrémité libre (34a) de l'extension (34) comparé à la saillie de l'extrémité pouvant être actionnée (41a) de la pédale de frein (41) dans la direction d'extension (X).

3. Roulette verrouillable (1) selon la revendication 1 ou la revendication 2, dans laquelle, lorsque le dispositif de libération (50) est dans sa deuxième position (U), l'extrémité pouvant être actionnée (41a) de la pédale de frein (41) fait saillie dans la direction d'extension (X) plus loin vers l'extérieur à partir de l'extrémité libre (34a) de l'extension (34) comparé à la saillie de l'extrémité pouvant être actionnée (50a) du dispositif de libération (50) dans la direction d'extension (X).

4. Roulette verrouillable (1) selon l'une quelconque des revendications précédentes, lorsque le dispositif de libération (50) est dans sa première position (L), l'extrémité pouvant être actionnée (50a) du dispositif de libération (50) est un point le plus à l'extérieur de la roulette (1).

5. Roulette verrouillable (1) selon l'une quelconque des revendications précédentes, dans laquelle, lorsque le dispositif de libération (50) est dans sa deuxième position (U), l'extrémité pouvant être actionnée (41a) de la pédale de frein (41) est un point le plus à l'extérieur de la roulette (1).

6. Roulette verrouillable (1) selon l'une quelconque des revendications précédentes, dans laquelle le dispositif de libération (50) est élastique.

7. Roulette verrouillable (1) selon l'une quelconque des revendications précédentes, dans laquelle le dispositif de libération (50) est en forme de U, dans laquelle l'extrémité d'application (50b) est ouverte et agencée pour être appliquée sur l'extrémité libre (34a) de l'extension (34) du support en fourche (30), et l'extrémité pouvant être actionné opposée (50a) est fermée et agencée pour renfermer l'extrémité libre (34a) de l'extension (34) du support en fourche (30).

8. Roulette verrouillable (1) selon l'une quelconque des revendications précédentes, dans laquelle le dispositif de libération (50) comprend une partie couvercle (50c) agencée pour couvrir la fente (55) telle que la fente (55) et la partie couvercle (50c) forment une chambre fermée vers le haut qui est agencée pour accueillir et couvrir l'extrémité de libération (41b) de la pédale de frein (41).

9. Roulette verrouillable (1) selon l'une quelconque des revendications précédentes, dans laquelle le dispositif de libération (50) comprend des indications de marquage (54) qui indiquent une direction de libération du dispositif de libération (50), pour déverrouiller la roulette verrouillable (1).

10. Roulette verrouillable (1) selon l'une quelconque des revendications précédentes, dans laquelle le dispositif de libération (50) comprend une première couleur de signal.

11. Roulette verrouillable (1) selon l'une quelconque des revendications précédentes, dans laquelle la pédale de frein (41) comprend une deuxième couleur de signal.

12. Roulette verrouillable (1) selon l'une quelconque des revendications précédentes, comprenant en outre :
un élément annulaire (11) fixé au moyen d'attache (10) et raccordant le moyen d'attache (10) au dessus (31) du support en fourche (30),
une bague supérieure de billes (12) interposée entre des chemins de roulement à billes définis entre le moyen d'attache (10) et le dessus (31) du support en fourche (30) et une bague inférieure de billes (13) interposée entre des chemins de roulement à billes définis entre le dessus (31) du support en fourche (30) et l'élément annulaire (11).

13. Roulette verrouillable (1) selon la revendication 12, dans laquelle la plaque (40) du frein de stationnement comprend en outre une deuxième extrémité (40b) opposée à la première extrémité (40a) et qui s'étend sous le dessus (31) du support en fourche (30) et qui est agencée pour coopérer avec un bord denté (14) de l'élément annulaire (11) pour verrouiller le support en fourche (30) contre une rotation relativement au moyen d'attache (10).
